# EUROPEAN PATENT APPLICATION

(11) **EP 4 692 139 A1**
(43) Date of publication of application: **11.02.2026**
(21) Application number: 25795383.6
(22) Date of filing: 05.06.2025
(51) Int. Cl.: C08F 210/16, C08F 4/659, C08F 4/6592

(54) **SUPPORTED-METALLOCENE HYBRID CATALYST AND METHOD FOR PRODUCING POLYETHYLENE USING SAME**

(30) Priority: 05.06.2024 KR 20240073746
(71) Applicant: LG Chem, Ltd., Seoul 07336 (KR)
(72) Inventor: JUNG, Yoonchul, Daejeon 34122 (KR); GWON, Donghyeon, Daejeon 34122 (KR); KANG, Minyoung, Daejeon 34122 (KR); KIM, Byung Seok, Daejeon 34122 (KR); HAN, Chang Woan, Daejeon 34122 (KR); LEE, Chaeeun, Daejeon 34122 (KR); KIM, Dong Hyun, Daejeon 34122 (KR); LEE, Suhyeon, Daejeon 34122 (KR); KIM, Seyoung, Daejeon 34122 (KR); KIM, Youngkook, Daejeon 34122 (KR)
(74) Representative: Hoffmann Eitle
(86) International application number: PCT/KR2025/007758
(87) International publication number: WO 2025/254478

(57) **Abstract**

The subject disclosure provides a hybrid-supported metallocene catalyst useful for the preparation of polyethylene exhibiting high impact strength characteristics along with excellent processability, and a method for preparing polyethylene using the same.

## Description

### [TECHNICAL FIELD]

### Cross-Reference to Related Application(s)

This application claims the benefit of priority based on Korean Patent Application No. 10-2024-0073746, filed on June 5, 2024, and Korean Patent Application No. 10-2025-0073545, filed on June 5, 2025, and all contents disclosed in the documents of said Korean patent applications are incorporated as part of this specification.

The subject disclosure relates to a hybrid-supported metallocene catalyst useful for the preparation of polyethylene exhibiting high impact strength properties along with excellent processability, and a method for preparing polyethylene using the same.

### [BACKGROUND ART]

Olefin polymerization catalyst systems can be classified into Ziegler-Natta and metallocene catalyst systems, and these two high-activity catalyst systems have been developed to suit their respective characteristics. The Ziegler-Natta catalyst, invented in the 1950s, has been widely applied to existing commercial processes, but since it is a multi-site catalyst in which several active sites are mixed, it is characterized by a broad molecular weight distribution of the polymer, and the composition distribution of the comonomer is not uniform, leading to a problem of limitations in securing desired physical properties.

On the other hand, a metallocene catalyst is composed of a combination of a main catalyst whose main component is a transition metal compound and a cocatalyst which is an organometallic compound whose main component is aluminum. Such a catalyst is a homogeneous complex catalyst and a single site catalyst, and according to the single site characteristic, a polymer with a narrow molecular weight distribution and a uniform comonomer composition distribution is obtained. It also has the characteristic that the stereoregularity, copolymerization characteristics, molecular weight, crystallinity, etc., of the polymer can be changed according to the modification of the catalyst's ligand structure and changes in polymerization conditions.

Meanwhile, linear low density polyethylene (linear low density polyethylene; LLDPE) is prepared by copolymerizing ethylene and an alpha-olefin at low pressure using a polymerization catalyst, and is a resin having a narrow molecular weight distribution, short chain branches of a certain length, and no long chain branches. linear low density polyethylene film, in addition to the characteristics of general polyethylene, has high breaking strength and elongation, and excellent tear strength, dart drop impact strength, etc., so its use in stretch films, overlap films, etc., where the application of conventional low density polyethylene or high density polyethylene is difficult, is increasing.

Recently, along with decarbonization, the demand for high-performance linear low density polyethylene for improving recyclability is increasing, and along with this, the demand for linear low density polyethylene with excellent processability and dart drop impact strength is also increasing.

Dart drop impact strength (Dart drop impact strength) is a very important mechanical property for confirming the various impact resistances of a resin.

However, linear low density polyethylene has the disadvantage of poor blown film processability and low transparency despite its excellent mechanical properties. A blown film is a film manufactured by blowing air into molten plastic to inflate it, and is also called an inflation film.

Linear low density polyethylene generally has the characteristic that as the density decreases, the transparency improves and the dart drop impact strength increases. However, if a large amount of alpha-olefin comonomer is used to prepare low density polyethylene, problems such as an increased frequency of fouling in the slurry polymerization process occur, so in the slurry polymerization process, products with a density of 0.915 g/cm³ or higher are often produced.

Therefore, there is a need for the development of a polyethylene that has a density of 0.915 g/cm³ or higher and can realize excellent mechanical properties such as dart drop impact strength along with excellent processability.

### [DETAILED DESCRIPTION OF THE INVENTION]

### [TECHNICAL PROBLEM]

To solve the problems of the prior art, the subject disclosure aims to provide a hybrid-supported metallocene catalyst useful for the preparation of polyethylene exhibiting high impact strength properties along with excellent processability.

Furthermore, the subject disclosure aims to provide a method for preparing polyethylene exhibiting excellent dart drop impact strength properties using the hybrid-supported metallocene catalyst.

### [TECHNICAL SOLUTION]

To solve the above problem, the subject disclosure provides a hybrid-supported metallocene catalyst, comprising: a first transition metal compound represented by the following Chemical Formula 1; a second transition metal compound represented by the following Chemical Formula 2; a cocatalyst; and a support:

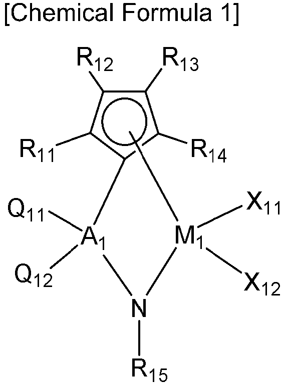

In the above Chemical Formula 1,
M₁ is a Group 4 transition metal,
X₁₁ and X₁₂ are each independently, C₁₋₂₀ alkyl, or halogen,
A₁ is carbon, silicon, or germanium,
Q₁₁ and Q₁₂ are each independently, hydrogen, halogen, C₁₋₂₀ alkyl, or C₂₋₂₀ alkoxyalkyl, and
R₁₁ to R₁₅ are each independently, hydrogen, or C₁₋₂₀ alkyl,

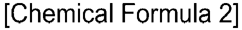

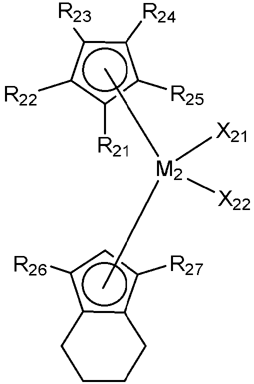

In the above Chemical Formula 2,
M₂ is a Group 4 transition metal,
X₂₁ and X₂₂ are each independently, C₁₋₂₀ alkyl or halogen,
R₂₁ to R₂₅ are each independently, C₁₋₂₀ alkyl,
R₂₆ is hydrogen, or C₁₋₂₀ alkyl, and
R₂₇ is hydrogen, C₁₋₂₀ alkyl, C₂₋₂₀ alkoxy, or C₂₋₂₀ alkoxyalkyl.

Furthermore, the subject disclosure provides a method for preparing polyethylene, comprising a step of slurry polymerizing an ethylene monomer and an olefin monomer while feeding hydrogen in the presence of the aforementioned hybrid-supported metallocene catalyst.

In the subject disclosure, terms such as first, second, etc., are used to describe various constituent elements, and these terms are used only for the purpose of distinguishing one constituent element from another.

Furthermore, the terms used in this specification are used only to describe exemplary embodiments and are not intended to limit the subject disclosure. A singular expression includes a plural expression unless the context clearly indicates otherwise. In this specification, it should be understood that terms such as "comprising," "including," or "having" are intended to designate the presence of stated features, numbers, steps, constituent elements, or combinations thereof, and do not preclude the possibility of the presence or addition of one or more other features, numbers, steps, constituent elements, or combinations thereof.

Also, in this specification, "~" indicating a numerical range includes both the upper and lower limits of the numerical range. For example, A to B means A or more and B or less.

Since the subject disclosure can be modified in various ways and can have various forms, specific embodiments will be illustrated and described in detail below. However, this is not intended to limit the subject disclosure to specific disclosed forms, and it should be understood that it includes all modifications, equivalents, and substitutes included in the spirit and technical scope of the subject disclosure.

Hereinafter, the hybrid-supported metallocene catalyst of the subject disclosure and the method for preparing polyethylene using the same will be described in detail.

The hybrid-supported metallocene catalyst according to the subject disclosure comprises: a first transition metal compound represented by the following Chemical Formula 1; a second transition metal compound represented by the following Chemical Formula 2; a cocatalyst; and a support:

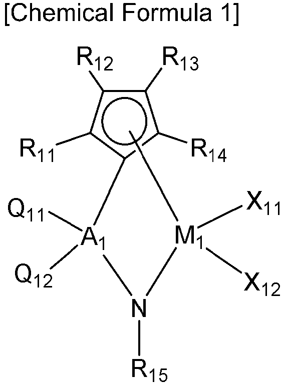

In the above Chemical Formula 1,
M₁ is a Group 4 transition metal,
X₁₁ and X₁₂ are each independently, C₁₋₂₀ alkyl, or halogen,
A₁ is carbon, silicon, or germanium,
Q₁₁ and Q₁₂ are each independently, hydrogen, halogen, C₁₋₂₀ alkyl, or C₂₋₂₀ alkoxyalkyl, and
R₁₁ to R₁₅ are each independently, hydrogen, or C₁₋₂₀ alkyl,

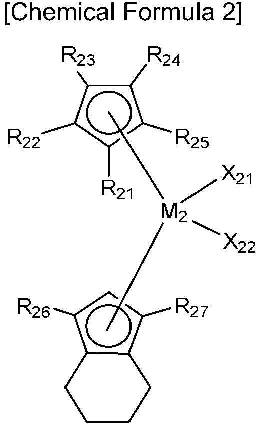

In the above Chemical Formula 2,
M₂ is a Group 4 transition metal,
X₂₁ and X₂₂ are each independently, C₁₋₂₀ alkyl or halogen,
R₂₁ to R₂₅ are each independently, C₁₋₂₀ alkyl,
R₂₆ is hydrogen, or C₁₋₂₀ alkyl, and
R₂₇ is hydrogen, C₁₋₂₀ alkyl, C₂₋₂₀ alkoxy, or C₂₋₂₀ alkoxyalkyl.

In the subject disclosure, the substituents of the above Chemical Formulas will be described more specifically as follows.

Halogen may be fluorine (F), chlorine (CI), bromine (Br), or iodine (I).

The C₁₋₂₀ alkyl may be a straight chain, branched chain, or cyclic alkyl. Specifically, the C₁₋₂₀ alkyl may be a C1-20 straight chain alkyl; a C1-10 straight chain alkyl; a C1-5 straight chain alkyl; a C3-20 branched chain or cyclic alkyl; a C3-15 branched chain or cyclic alkyl; or a C3-10 branched chain or cyclic alkyl. More specifically, the C1-20 alkyl may be a methyl group, ethyl group, n-propyl group, iso-propyl group, n-butyl group, iso-butyl group, tert-butyl group, n-pentyl group, iso-pentyl group, or cyclohexyl group, etc.

The C₂₋₂₀ alkenyl may be a straight chain, branched chain, or cyclic alkenyl. Specifically, the C₂₋₂₀ alkenyl may be a C₂₋₂₀ straight chain alkenyl, a C₂₋₁₀ straight chain alkenyl, a C₂₋₅ straight chain alkenyl, a C₃₋₂₀ branched chain alkenyl, a C₃₋₁₅ branched chain alkenyl, a C₃₋₁₀ branched chain alkenyl, a C₅₋₂₀ cyclic alkenyl, or a C5-10 cyclic alkenyl. More specifically, the C₂₋₂₀ alkenyl may be ethenyl, propenyl, butenyl, pentenyl, or cyclohexenyl, etc.

The C₁₋₂₀ alkoxy may be a straight chain, branched chain, or cyclic alkoxy group. Specifically, the C₁₋₂₀ alkoxy may be a C₁₋₂₀ straight chain alkoxy group; a C1-10 straight chain alkoxy; a C1-5 straight chain alkoxy group; a C3-20 branched chain or cyclic alkoxy; a C3-15 branched chain or cyclic alkoxy; or a C3-10 branched chain or cyclic alkoxy. More specifically, the C1-20 alkoxy may be a methoxy group, ethoxy group, n-propoxy group, iso-propoxy group, n-butoxy group, iso-butoxy group, tert-butoxy group, n-pentoxy group, iso-pentoxy group, neo-pentoxy group, or cyclohexoxy group, etc.

The C₂₋₂₀ alkoxyalkyl may be a substituent having a structure including -R_{y}-OR_{z}, where one or more hydrogens of the alkyl (-R_{y}) are substituted with an alkoxy (-OR_{z}). Specifically, the C2 to C20 alkoxyalkyl may be a methoxymethyl group, methoxyethyl group, ethoxymethyl group, iso-propoxymethyl group, iso-propoxyethyl group, iso-propoxyhexyl group, tert-butoxymethyl group, tert-butoxyethyl group, or tert-butoxyhexyl group, etc.

Also, the Group 4 transition metal may be titanium, zirconium, hafnium, etc.

The hybrid-supported metallocene catalyst according to the subject disclosure is a hybrid catalyst that includes both a first transition metal compound with high molecular weight and high copolymerization ability and a second transition metal compound with low molecular weight and low copolymerization ability.

Specifically, the first transition metal compound represented by Chemical Formula 1 contributes to making a high molecular weight copolymer having a high SCB content, and the second transition metal compound represented by Chemical Formula 2 contributes to preparing a low molecular weight copolymer having a low SCB (short chain branch) content.

Accordingly, the hybrid-supported metallocene catalyst of the subject disclosure can exhibit high copolymerization ability in the high molecular weight region of polyethylene due to the first transition metal compound, while exhibiting low copolymerization ability in the low molecular weight region of polyethylene due to the action of the second transition metal compound. As a result, the polyethylene prepared using the hybrid-supported metallocene catalyst according to the subject disclosure can exhibit high impact strength while having excellent processability through the formation of tie-molecules due to the strong expression of low crystallinity in the high molecular weight region.

In the hybrid-supported metallocene catalyst according to the subject disclosure, the first transition metal compound contributes to the preparation of a high molecular weight copolymer and exhibits a relatively higher comonomer incorporation rate compared to the second transition metal compound.

Specifically, in the above Chemical Formula 1, M₁ is zirconium (Zr) or titanium (Ti), and X₁₁ and X₁₂ may each independently be halogen, and preferably, may be chloro.

Furthermore, the compound represented by Chemical Formula 1 includes an A₁(Q₁₁)(Q₁₂) group as a bridge group between cyclopentadienyl and an amine. In the above Chemical Formula 1, A₁ is silicon, and the substituents of A₁, Q₁₁ and Q₁₂, may each independently be hydrogen, halogen, C₁₋₁₀ alkyl, or C₂₋₁₀ alkoxyalkyl. At this time, either one of Q₁₁ and Q₁₂ which are substituents of the A₁, may include a tether group of C₂₋₂₀ alkoxyalkyl. As such, when it has a tether group, leaching of the catalyst precursor during the polymerization reaction is prevented, and as a result, fouling due to the reaction of the leached catalyst precursor and the cocatalyst can be prevented.

Furthermore, when the bridge group includes a tether group, any one of Q₁₁ and Q₁₂, the substituents of A₁, may be C₂₋₂₀ alkoxyalkyl, and the other one may be C₁₋₂₀ alkyl. As such, when any one of Q₁₁ and Q₁₂ includes a tether group of C₂₋₂₀ alkoxyalkyl as a bridge group connecting two ligands, in addition to the effect of preventing leaching of the catalyst precursor mentioned above, the atomic size becomes larger and the available angle increases compared to a carbon bridge in a conventional metallocene compound, so that the access of monomers during the polymerization reaction is facilitated, and more excellent catalyst activity can be exhibited. This effect can be further increased when any one of Q₁₁ and Q₁₂ in the tether is -(CH₂)n-R_{b} (wherein R_{b} may be a C₁₋₆ alkoxy group, more specifically a C₁₋₆ straight chain alkoxy group or a C₃₋₆ branched alkoxy group, and even more specifically a C₃₋₆ branched alkoxy such as a tert-butoxy group, and n is an integer from 2 to 10, or 3 to 9), and furthermore, when the other one is a C₁₋₄ alkyl. Preferably, any one of Q₁₁ and Q₁₂ may be tert-butoxyhexyl, and the other one may be methyl.

Furthermore, in the above Chemical Formula 1, R₁₁ to R₁₅ may each independently be C₁₋₆ alkyl. Specifically, the hydrogens of cyclopentadienyl in the above Chemical Formula 1 may each independently be substituted with C₁₋₆ alkyl. When the cyclopentadienyl is substituted, more excellent catalyst activity can be exhibited due to the inductive effect that can supply sufficient electrons. Accordingly, the hydrogens in the cyclopentadienyl may more specifically be C₁₋₄ alkyl, and even more specifically, five hydrogens may be substituted with C₁₋₄ alkyl or methyl.

Furthermore, in the above Chemical Formula 1, R₁₅, the substituent of the amine connected through the cyclopentadienyl and the bridge group, may be C₁₋₆ alkyl, more specifically C₁₋₄ straight chain alkyl or C₃₋₆ branched alkyl, and even more specifically tert-butyl.

As a specific example of the first transition metal compound represented by Chemical Formula 1, a compound of the following structure can be mentioned, but the subject disclosure is not limited thereto.

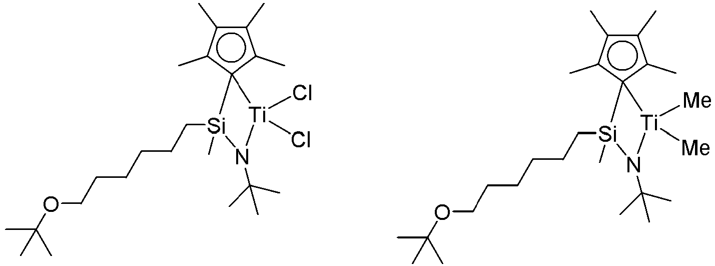

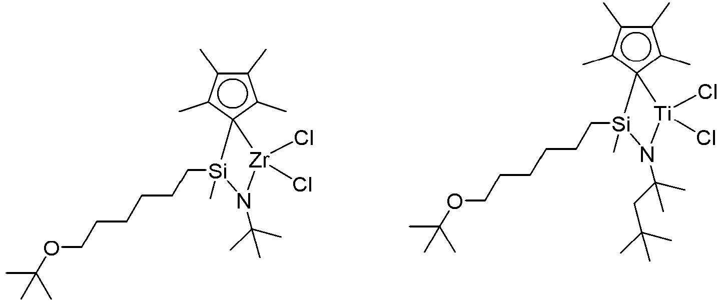

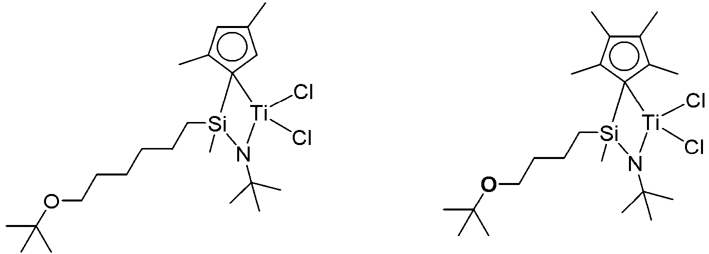

The first transition metal compound represented by Chemical Formula 1 as described above can be synthesized by applying known reactions, and for a more detailed synthesis method, the examples can be referred to.

Meanwhile, the second transition metal compound represented by Chemical Formula 2 has a structure in which a hydrogenated indene group, specifically a 4,5,6,7-tetrahydro-1-indene group, and cyclopentadiene are unbridged, so the electronic/steric environment around the transition metal can be easily controlled. As a result, the characteristics such as the chemical structure, molecular weight distribution, and mechanical properties of the synthesized polyethylene can be easily adjusted.

Specifically, in the above Chemical Formula 2, M₂ is zirconium (Zr), and X₂₁ and X₂₂ may each independently be halogen, and preferably, may be chloro. When Zr is included as the central metal of the second transition metal compound represented by Chemical Formula 2, it has more orbitals that can accept electrons compared to when other Group 14 elements such as Hf are included, so it can easily bond with monomers with a higher affinity, and as a result, a more excellent catalyst activity improvement effect can be exhibited.

Furthermore, all hydrogens of the cyclopentadienyl group of the second transition metal compound represented by Chemical Formula 2 are substituted with C₁₋₂₀ alkyl. Specifically, in Chemical Formula 2, the cyclopentadienyl group is substituted with substituents R₂₁ to R₂₅, thereby exhibiting more excellent catalyst activity due to the inductive effect that can supply sufficient electrons, and by appropriately controlling the distribution of comonomers in the polyethylene prepared in combination with the first transition metal compound represented by Chemical Formula 1, the impact strength and processability can be simultaneously improved.

The substituents R₂₁ to R₂₅ of the cyclopentadienyl may each independently be C₁₋₁₀ alkyl, more specifically C₁₋₄ alkyl, and even more specifically methyl.

Furthermore, by including a hydrogenated indene group, i.e., a 4,5,6,7-tetrahydro-1-indene group, as a ligand, it exhibits more excellent hydrogen reactivity compared to the case of including a conventional indene group, so the amount of hydrogen input and the amount of wax generated during the polymerization reaction can be reduced, and as a result, process stability can be improved. Also, due to the synergistic effect of being combined with the first transition metal compound represented by Chemical Formula 1, the distribution of comonomers in the finally produced polyethylene can be concentrated toward the high molecular weight side, thereby significantly improving the impact strength.

Furthermore, in the second transition metal compound represented by Chemical Formula 2, the 1- and 3-positions of the 4,5,6,7-tetrahydro-1-indene group may be unsubstituted or substituted. That is, as described above, R₂₆, the substituent of the 4,5,6,7-tetrahydro-1-indene group of the second transition metal compound, may be hydrogen or C₁₋₂₀ alkyl, and R₂₇ may be hydrogen, C₁₋₂₀ alkyl, C₂₋₂₀ alkoxy, or C₂₋₂₀ alkoxyalkyl. Specifically, R₂₆ may be hydrogen or C₁₋₆ alkyl, and R₂₇ may be hydrogen, C₁₋₆ alkyl, or an alkoxyalkyl of -(CH₂)ₙ-R_{b} (wherein R_{b} is a C₁₋₆ alkoxy group, more specifically a C₁₋₆ straight chain alkoxy group or a C₃₋₆ branched alkoxy group, and n is an integer from 2 to 10). Also, in the -(CH₂)ₙ-R_{b}, R_{b} may be a C₃₋₆ branched alkoxy group, more specifically a C₃₋₆ branched alkoxy such as a tert-butoxy group, and n may be an integer from 3 to 9.

Preferably, R₂₆ may be hydrogen or methyl, and R₂₇ may be hydrogen, methyl, ethyl, or tert-butoxyhexyl.

As a specific example of the second transition metal compound represented by Chemical Formula 2, a compound of the following structure can be mentioned, but the subject disclosure is not limited thereto.

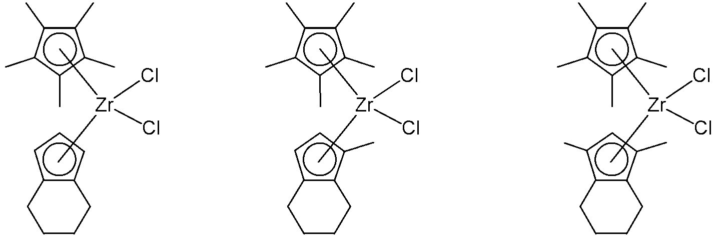

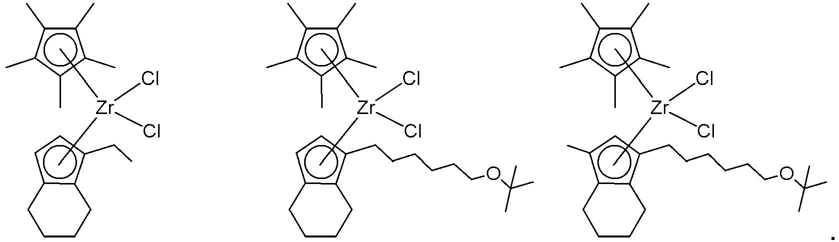

The second transition metal compound represented by Chemical Formula 2 as described above can be synthesized by applying known reactions, and for a more detailed synthesis method, the examples can be referred to.

Meanwhile, in the hybrid-supported metallocene catalyst according to the subject disclosure, the catalyst activity can be increased and the physical properties of the prepared polymer can be further improved by controlling the molar ratio of the first and second transition metal compounds.

For example, the hybrid-supported metallocene catalyst may include the first and second transition metal compounds in a molar ratio of 1:1 to 10:1. When the above mixing ratio condition is satisfied, the activity of the catalyst is excellently maintained, and the high and low copolymerization properties of the polyethylene prepared from the hybrid-supported catalyst are optimized, which can further improve the dart drop impact strength and processability. More specifically, the molar ratio of the first and second transition metal compounds may be 2:1 to 8:1, or 3:1 to 7:1.

Furthermore, the hybrid-supported metallocene catalyst according to the subject disclosure includes a cocatalyst. When the hybrid-supported metallocene catalyst includes a cocatalyst, it exhibits high catalyst activity and can improve process stability.

Specifically, the cocatalyst may include at least one compound represented by the following Chemical Formula 3.

[Chemical Formula 3] -[Al(R₄₁)-O]a-

In the above Chemical Formula 3,
R₄₁ is halogen; or a C₁₋₂₀ hydrocarbyl unsubstituted or substituted by halogen; and
a is an integer of 2 or more.

Meanwhile, in this specification, a hydrocarbyl group is a monovalent functional group in the form of a hydrocarbon from which a hydrogen atom has been removed, and may include an alkyl group, alkenyl group, alkynyl group, aryl group, aralkyl group, aralkenyl group, aralkynyl group, alkylaryl group, alkenylaryl group, and alkynylaryl group, etc. And, the C1 to 20 hydrocarbyl group may be a C1 to 15 or C1 to 10 hydrocarbyl group. Specifically, the C1 to 20 hydrocarbyl group may be a straight chain, branched chain, or cyclic alkyl group such as a methyl group, ethyl group, n-propyl group, iso-propyl group, n-butyl group, iso-butyl group, tert-butyl group, n-pentyl group, n-hexyl group, n-heptyl group, or cyclohexyl group; or an aryl group such as a phenyl group, naphthyl group, or anthracenyl group.

Examples of the compound represented by Chemical Formula 3 include alkylaluminoxane-based compounds such as methylaluminoxane, ethylaluminoxane, isobutylaluminoxane, or butylaluminoxane, and any one of these or a mixture of two or more thereof may be used.

Among the above compounds, the cocatalyst may more specifically be an alkylaluminoxane-based cocatalyst such as methylaluminoxane.

The alkylaluminoxane-based cocatalyst stabilizes the first and second transition metal compounds, and also acts as a Lewis acid, thereby including a metal element that can form a bond through Lewis acid-base interaction with the functional group introduced into the bridge group of the first and second transition metal compounds, which can further enhance the catalyst activity.

Also, the amount of the cocatalyst used can be appropriately adjusted according to the desired catalyst and the physical properties or effects of the polyethylene. For example, when using silica as a support as described later, the cocatalyst may be supported in an amount of 100 g or more, or 1000 g or more, or 2000 g or more, and 6000 g or less, or 5500 g or less, or 5400 g or less, based on 1,000 g of silica, per weight of the support.

Also, the hybrid-supported metallocene catalyst according to the subject disclosure may include a support. When the hybrid-supported metallocene catalyst includes a support, the first and second transition metal compounds are used in the form of a supported catalyst supported on the support.

As the support, a support having a highly reactive hydroxyl group, silanol group, or siloxane group on its surface can be used, and for this purpose, one that has been surface-modified by calcination, or one from which moisture has been removed from the surface by drying can be used.

For example, silica prepared by calcining silica gel, silica such as silica dried at a high temperature, silica-alumina, and silica-magnesia, etc., can be used, and these may typically contain oxide, carbonate, sulfate, and nitrate components such as Na₂O, K₂CO₃, BaSO₄, and Mg(NO₃)₂.

When used in a supported catalyst state, the particle shape and bulk density of the prepared polymer are excellent, and it can be suitably used in conventional slurry polymerization, bulk polymerization, or gas phase polymerization processes. Also, among various supports, in the case of a silica support, since the functional groups of the transition metal compound are chemically bonded and supported, there is almost no catalyst that is liberated from the support surface during the ethylene polymerization process, and as a result, fouling, where the reactor wall or polymer particles stick together when preparing polyethylene by slurry or gas phase polymerization, can be minimized.

The support may be one having an average particle diameter (D50) of 20 to 40 µm. When having the above particle size, it can support the transition metal compound with better efficiency, and as a result, can increase the catalyst activity. More specifically, it may be 20 µm or more, or 25 µm or more, and 40 µm or less, or 30 µm or less.

Meanwhile, in the subject disclosure, the average particle diameter (D50) of the support means the particle diameter at the 50% point of the cumulative distribution of the number of particles according to particle size (particle diameter). The D50 can be measured using a laser diffraction method, and specifically, after dispersing the target support in a dispersion medium such as deionized water, it is introduced into a commercially available laser diffraction particle size measuring device (e.g., Microtrac S3500) to measure the difference in diffraction patterns according to the particle size as the particles pass through a laser beam to calculate the particle size distribution. The particle size at the point that becomes 50% of the cumulative distribution of the number of particles according to the particle diameter in the measuring device is calculated, and this is taken as the average particle size.

Also, when supported on the support, the first and second transition metal compounds may be supported in a content range of 1 mmol or more, 3 mmol or more, 5 mmol or more, 7 mmol or more, or 10 mmol or more, and 100 mmol or less, or 80 mmol or less, or 60 mmol or less, or 50 mmol or less, respectively, based on 1,000 g of the silica support for example. When supported in the above content range, it exhibits appropriate supported catalyst activity, which can be advantageous in terms of maintaining catalyst activity and economic efficiency.

The hybrid-supported metallocene catalyst according to the subject disclosure having the above configuration can be prepared by a preparation method comprising a step of supporting a cocatalyst compound on a support, and a step of supporting the first and second transition metal compounds on the support. At this time, the supporting order of the cocatalyst and the first and second transition metal compounds can be changed as needed, and the supporting order of the first and second transition metal compounds can also be changed as needed. The first and second transition metal compounds may be supported simultaneously. Considering the effect of the supported catalyst of the structure determined according to the supporting order, among these, supporting the first and second transition metal compounds sequentially after supporting the cocatalyst on the support allows the prepared supported catalyst to realize higher catalyst activity and better process stability in the polyethylene preparation process.

The hybrid-supported metallocene catalyst according to the subject disclosure, as described above, includes the first and second transition metal compounds having specific structures, thereby exhibiting excellent catalyst activity. Accordingly, the hybrid-supported metallocene catalyst can be suitably used for the polymerization of ethylene monomers and olefin-based monomers.

Accordingly, the subject disclosure provides a method for preparing polyethylene, comprising a step of polymerizing an ethylene monomer and an alpha-olefin based monomer while feeding hydrogen in the presence of the hybrid-supported metallocene catalyst.

As a specific example of the alpha-olefin based monomer, propylene, 1-butene, 1-pentene, 4-methyl-1-pentene, 1-hexene, 1-heptene, 1-octene, 1-decene, 1-undecene, 1-dodecene, 1-tetradecene, 1-hexadecene, 1-eicosene, norbornene, norbornadiene, ethylidenenorbornene, phenylnorbornene, vinylnorbornene, dicyclopentadiene, 1,4-butadiene, 1,5-pentadiene, 1,6-hexadiene, styrene, alphamethylstyrene, divinylbenzene, 3-chloromethylstyrene, etc., can be mentioned, and two or more of these monomers can be mixed and copolymerized. More specifically, the alpha-olefin based monomer may be 1-butene, 1-hexene, or 1-octene.

The feed amount of the alpha-olefin based monomer can be determined according to the physical properties of the polyethylene to be prepared. For example, considering the physical properties of the polyethylene to be realized in the subject disclosure and the effects of high dart drop impact strength and processability improvement, the alpha-olefin based monomer may be fed at 5 to 20% by weight based on the total weight of monomers including the ethylene monomer and the alpha-olefin based monomer. More specifically, the alpha-olefin based monomer may be fed at 6% by weight or more, or 7% by weight or more, or 9% by weight or more, and 19% by weight or less, or 18% by weight or less, or 17% by weight or less, based on the total weight of monomers including the ethylene monomer and the alpha-olefin based monomer.

The polymerization reaction is performed under the condition of hydrogen feeding.

Specifically, based on the total weight of monomers including the ethylene monomer and the alpha-olefin based monomer, hydrogen may be fed in an amount of 15 to 45 ppm, more specifically 15 ppm or more, or 20 ppm or more, or 25 ppm or more, and 45 ppm or less, or 40 ppm or less, or 35 ppm or less. When fed in the above range, the implementation of the physical properties of the aforementioned polyethylene is easier. If the polymerization reaction is performed under the condition of no hydrogen feeding, the melt index (MI) of the prepared polyethylene may be significantly lowered.

The polymerization reaction can be performed as a slurry polymerization reaction.

Accordingly, it can be performed using one continuous slurry polymerization reactor or a loop slurry reactor.

Also, the hybrid-supported catalyst can be dissolved or diluted in an aliphatic hydrocarbon solvent of 4 to 12 carbon atoms, for example, isobutane, pentane, hexane, heptane, nonane, decane, and their isomers, and an aromatic hydrocarbon solvent such as toluene, benzene, a hydrocarbon solvent substituted with a chlorine atom such as dichloromethane, chlorobenzene, etc., and then injected. It is preferable that the solvent used here is treated with a small amount of alkyl aluminum to remove a small amount of water or air that acts as a catalyst poison, and it is also possible to carry it out by using more cocatalyst.

Also, the polymerization reaction may be performed at a temperature of 40°C or higher, or 60°C or higher, or 80°C or higher, and 110°C or lower, or 100°C or lower, or 90°C or lower. Also, if the pressure condition during the polymerization reaction is further controlled, it may be performed under a pressure of 5 bar or higher, or 10 bar or higher, or 20 bar or higher, and 50 bar or lower, or 45 bar or lower, or 40 bar or lower. When polymerization proceeds under such temperature and pressure, the desired physical properties of polyethylene can be more easily realized.

The polyethylene prepared by the above preparation method is excellent in both processability, represented by processing pressure, and impact strength, measured by dart drop strength. In a preferred embodiment, the polyethylene may be an ethylene/1-hexene copolymer.

Specifically, the polyethylene prepared using the hybrid-supported metallocene catalyst satisfies the following conditions (i) to (iii):
(i) density measured according to ASTM D1505 standard: 0.91 to 0.93 g/cm³
(ii) dart drop impact strength measured according to ASTM D1709 [Method A] is 700 gf or more.

Furthermore, the polyethylene has a density measured according to ASTM D1505 of 0.91 g/cm³ or more, or 0.915 g/cm³ or more, and 0.93 g/cm³ or less, or 0.925 g/cm³ or less, or 0.923 g/cm³ or less. In general, as the density of polyethylene increases, the dart drop impact strength decreases. According to the research of the present inventors, high density polyethylene exceeding 0.93 g/cm³ exhibits a low dart drop impact strength of 300 gf or less. On the other hand, the polyethylene according to the subject disclosure exhibits excellent dart drop impact strength by having a density in the above range.

Furthermore, the polyethylene, after preparing a polyethylene film (blown-up ratio (BUR, Blown-Up Ratio) of 2 to 3, more specifically 2.5, and a film thickness of 45 to 55 µm, more specifically 50 µm) using a film making machine, has a dart drop impact strength measured according to ASTM D1709 [Method A] of 800 gf or more, more specifically 800 to 2000 gf, or 820 to 1500 gf, or 840 to 1300 gf.

Furthermore, the polyethylene has a processing pressure (processing load, (bar)) measured using a Haake extruder at cylinder-1/-2/-3/die = 180/185/185/190 and a speed of 40 rpm of 250 bar or less, more specifically 150 to 250 bar, or 155 to 230 bar, or 160 to 215 bar.

Furthermore, the polyethylene may have a melt strength of 50 mN or more, more specifically 50 to 150 mN, or 55 to 130 mN, or 60 to 125 mN, 65 to 125 mN. The measurement method of the melt strength can be specified in the examples described later.

### [EFFECTS OF THE INVENTION]

As described above, the hybrid-supported metallocene catalyst according to the subject disclosure exhibits high activity in olefin polymerization and can prepare polyethylene having high impact strength properties along with excellent processability.

Accordingly, the polyethylene prepared using the hybrid-supported metallocene catalyst is excellent in processability, mechanical properties, and transparency, and thus can be usefully used for applications such as films.

### [MODE FOR CARRYING OUT THE INVENTION]

Hereinafter, preferred examples are presented to aid in the understanding of the invention. However, the following examples are only for illustrating the subject disclosure and do not limit the subject disclosure to them alone.

### <Preparation of transition metal compound>

### Synthesis Example 1-1

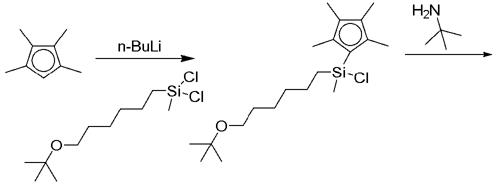

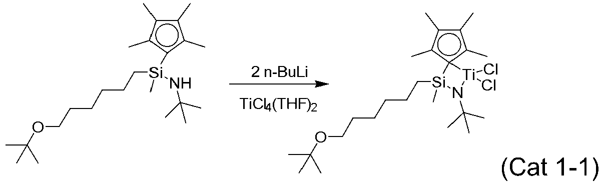

### Preparation of ligand

TMCp (Tetramethylcyclopentadiene, 1 equiv) was dissolved in THF (0.3 M), and then n-BuLi (1.05 eq) was slowly added dropwise at -25°C, followed by stirring at room temperature for 3 hours. To the resulting reaction mixture, t-BuOHexSiMeCl₂ (1.00 eq) was added at -10°C, followed by stirring overnight at room temperature. The solvent was completely removed by vacuum drying, and tBuNH₂ (10 eq) was added and stirred overnight at room temperature. Thereafter, work-up was performed using water, followed by drying to obtain a ligand.

### Preparation of transition metal compound

The ligand prepared above was dissolved in Toluene (0.3 M), and n-BuLi (2.05 eq) was added at -25°C, followed by stirring at room temperature for 3 hours. In a Glove Box, TiCl₄(THF)₂ (Titanium tetrachloride tetrahydrofuran adduct, 1 eq) was prepared in another flask, and at -25°C, it was transferred to the ligand-Li flask using a cannula and washed and transferred using Toluene (1.0 M).

When the reaction was complete, the solvent was removed by vacuum drying, and DCM was re-added to remove LiCl through a filter, and the filtrate was vacuum dried to obtain a liquid transition metal compound.

¹H NMR (500 MHz, CDCl3) δ 3.34 (t, 2H), 2.24 (d, J = 1.7 Hz, 6H), 2.13 (d, J = 3.2 Hz, 6H), 1.57 - 1.45 (m, 6H), 1.42 (s, 9H), 1.32 - 1.22 (m, 4H), 1.18 (s, 9H), 0.67 (s, 3H).

### Synthesis Example 1-2

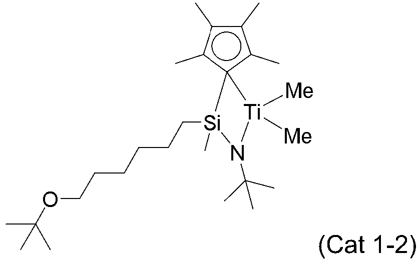

The transition metal compound prepared in Synthesis Example 1-1 was dissolved in Toluene (0.3 M), and MeLi (2.05 eq) was added at -25°C, followed by stirring at room temperature for 3 hours.

When the reaction was complete, the solvent was removed by vacuum drying, and DCM was re-added to remove LiCl through a filter, and the filtrate was vacuum dried to obtain a liquid transition metal compound.

¹H NMR (500 MHz, CDCl3) δ 3.34 (t, 2H), 2.25 (s,3H), 2.23 (s, 3H), 2.14 (s, 6H), 1.58 - 1.43 (m, 6H), 1.40 (s, 9H), 1.30 - 1.22 (m, 4H), 1.21 (s, 9H), 0.68 (s, 3H), -1.31 (s, 3H), -1.38 (s, 3H).

### Synthesis Example 1-3

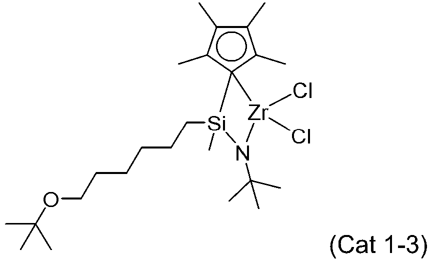

A transition metal compound of the above structure was prepared in the same manner as in Synthesis Example 1-1, except that ZrCl₄(THF)₂ (Zirconium tetrachloride tetrahydrofuran adduct) was used instead of TiCl₄(THF)₂ (Titanium tetrachloride tetrahydrofuran adduct) during the preparation of the transition metal compound.

¹H NMR (500 MHz, CDCl3) δ 3.42 (t, 2H), 2.29 (s, 3H), 2.28 (s, 3H), 2.22 (s, 6H), 1.64 - 1.36 (m, 6H),1.49 (s, 9H), 1.32 - 1.24 (m, 4H), 1.27 (s, 9H), 0.69 (s, 3H).

### Synthesis Example 2-1

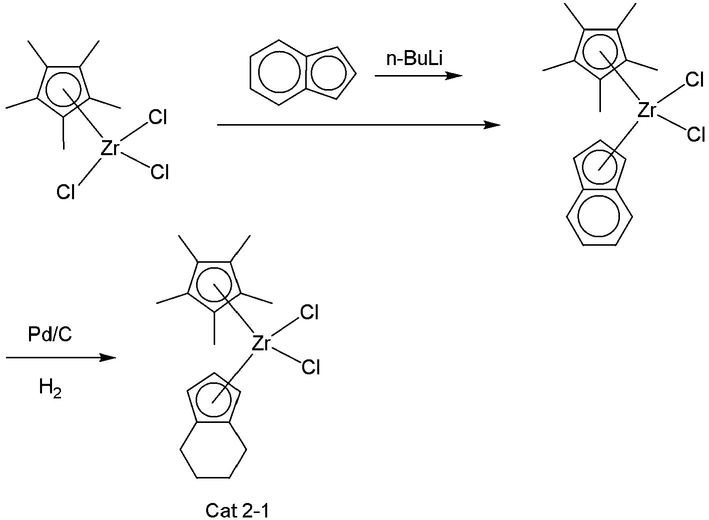

### Preparation of transition metal compound

Indene was dissolved in Ether (0.3 M), and n-BuLi (1.05 eq) was added at - 25°C, followed by stirring at room temperature for 3 hours. In a Glove Box, PMCpZrCl₃ (Pentamethylcyclopentadienylzirconium trichloride) (1 eq) was prepared in another flask, and at -25°C, it was transferred to the Indene-Li flask using a cannula and washed and transferred using Ether (1.0 M).

When the reaction was complete, the solvent was removed by vacuum drying, DCM was re-added to remove LiCl through a filter, the filtrate was vacuum dried, and it was made into a slurry using Hexane. The resulting solid was then filtered and vacuum dried to obtain a solid metallocene compound intermediate.

In a Glove Box, the metallocene compound intermediate was placed in a mini parr, and Pd/C (10 wt%) was added at 5 mol%. A magnetic bar was added to this, and it was moved outside the Glove Box as a closed system. To this parr, DCM (0.5M) was added, and H₂ gas (10 barg) was introduced. Vent-charge was repeated 3 times, and then it was placed in a 40°C oil bath and stirred. When the pressure of the parr decreased to below 5 barg, the previous charge process was repeated, and the reaction was continued until there was no consumption of H₂ gas. When the reaction was complete, the remaining H₂ gas was vented and replaced with Ar gas. After cooling to room temperature, it was filtered using a cannula, and the filtrate was vacuum dried. The dried filtrate was made into a slurry using Hexane, which was then filtered to obtain a solid transition metal compound.

¹H NMR (500 MHz, CDCl3) δ 5.91 (t, J = 2.8 Hz, 1H), 5.46 (d, J = 2.8 Hz, 2H), 2.88 (dt, J = 16.2, 6.3 Hz, 2H), 2.51 (dt, J = 16.2, 6.0 Hz, 2H), 2.04 (s, 15H), 1.92 - 1.78 (m, 2H), 1.62 (dd, J = 12.5, 6.2 Hz, 2H).

### Synthesis Example 2-2

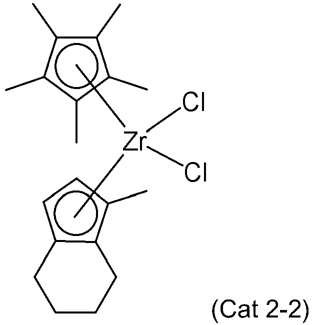

### Preparation of ligand

Indene (1 eq) was dissolved in THF (0.3 M), n-BuLi (1.05 eq) was slowly added dropwise at -25°C, and then stirred at room temperature for 3 hours. Then, CH₃-I (1.05 eq) was added at -10°C, stirred overnight at room temperature, and then worked-up using water and dried to obtain 3-methyl-Indene.

### Preparation of transition metal compound

The ligand prepared above was dissolved in Ether (0.3 M), n-BuLi (1.05 eq) was added at -25°C, and then stirred at room temperature for 3 hours. In a Glove Box, PMCpZrCl₃ (Pentamethylcyclopentadienylzirconium trichloride) (1 eq) was prepared in another flask, and at -25°C, it was transferred to the ligand-Li flask using a cannula and washed and transferred using Ether (1.0 M).

When the reaction was complete, the solvent was removed by vacuum drying, DCM was re-added to remove LiCl through a filter, the filtrate was vacuum dried, and it was made into a slurry using Hexane. The resulting solid was then filtered and vacuum dried to obtain a solid metallocene compound intermediate.

In a Glove Box, the metallocene compound intermediate was placed in a mini parr, and Pd/C (10 wt%) was added at 5 mol%. A magnetic bar was added to this, and it was moved outside the Glove Box as a closed system. To this parr, DCM (0.5M) was added, and H₂ gas (10 barg) was introduced. Vent-charge was repeated 3 times, and then it was placed in a 40°C oil bath and stirred. When the pressure of the parr decreased to below 5 barg, the previous charge process was repeated, and the reaction was continued until there was no consumption of H₂ gas. When the reaction was complete, the remaining H₂ gas was vented and replaced with Ar gas. After cooling to room temperature, it was filtered using a cannula, and the filtrate was vacuum dried. The dried filtrate was made into a slurry using Hexane, which was then filtered to obtain a solid transition metal compound.

¹H NMR (500 MHz, CDCl3) δ 5.62 (s, 1H), 5.14 (d, J = 2.1 Hz, 1H), 2.85 - 2.75 (m, 2H), 2.48 - 2.33 (m, 2H), 2.02 (s, 15H), 1.96 - 1.79 (m, 2H), 1.89 (s, 3H), 1.65 - 1.53 (m, 2H).

### Synthesis Example 2-3

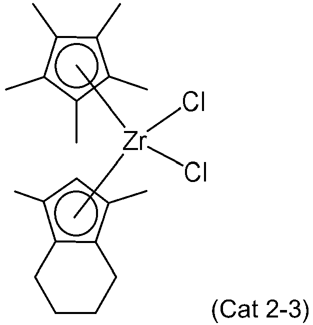

Indene (1 eq) was dissolved in THF (0.3 M), n-BuLi (1.05 eq) was slowly added dropwise at -25°C, and then stirred at room temperature for 3 hours. Then, CH₃-I (1.05 eq) was added at -10°C, stirred overnight at room temperature, and then worked-up using water and dried to obtain 3-Methyllndene. The thus synthesized 3-Methyllndene (1 eq) was dissolved in THF (0.3 M), n-BuLi (1.05 eq) was slowly added dropwise at - 25°C, and then stirred at room temperature for 3 hours. Then, CH₃-I (1.05 eq) was added at -10°C, stirred overnight at room temperature, and then worked-up using water and dried to obtain 1,3-dimethyl-indene.

### Preparation of transition metal compound

The ligand prepared above was dissolved in Ether (0.3 M), n-BuLi (1.05 eq) was added at -25°C, and then stirred at room temperature for 3 hours. In a Glove Box, PMCpZrCl₃ (Pentamethylcyclopentadienylzirconium trichloride) (1 eq) was prepared in another flask, and at -25°C, it was transferred to the ligand-Li flask using a cannula and washed and transferred using Ether (1.0 M).

When the reaction was complete, the solvent was removed by vacuum drying, DCM was re-added to remove LiCl through a filter, the filtrate was vacuum dried, and it was made into a slurry using Hexane. The resulting solid was then filtered and vacuum dried to obtain a solid metallocene compound intermediate.

In a Glove Box, the metallocene compound intermediate was placed in a mini parr, and Pd/C (10 wt%) was added at 5 mol%. A magnetic bar was added to this, and it was moved outside the Glove Box as a closed system. To this parr, DCM (0.5M) was added, and H₂ gas (10 barg) was introduced. Vent-charge was repeated 3 times, and then it was placed in a 40°C oil bath and stirred. When the pressure of the parr decreased to below 5 barg, the previous charge process was repeated, and the reaction was continued until there was no consumption of H₂ gas. When the reaction was complete, the remaining H₂ gas was vented and replaced with Ar gas. After cooling to room temperature, it was filtered using a cannula, and the filtrate was vacuum dried. The dried filtrate was made into a slurry using Hexane, which was then filtered to obtain a solid transition metal compound.

¹H NMR (500 MHz, CDCl3) δ 5.60 (s, 1H), 2.90 (dt, J = 16.4, 6.3 Hz, 2H), 2.32 (dt, J = 16.3, 6.0 Hz, 2H), 2.04 (s, 15H), 1.79 - 1.66 (m, 2H), 1.67 (s, 6H), 1.64 - 1.54 (m, 2H).

### Synthesis Example 2-4

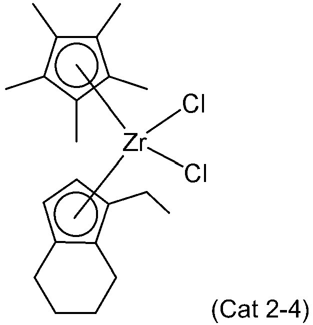

A transition metal compound of the above structure was prepared in the same manner as in Synthesis Example 2-2, except that CH₃-CH₂-I was used instead of CH₃-I during ligand preparation.

¹H NMR (500 MHz, CDCl3) δ 5.60 (d, J = 2.7 Hz, 2H), 5.20 (d, J = 2.7 Hz, 2H), 2.83 - 2.71 (m, 2H), 2.49 - 2.36 (m, 3H), 2.21 (dd, J = 15.1, 7.6 Hz, 1H), 2.01 (s, 15H), 1.98 - 1.80 (m, 2H), 1.66 - 1.51 (m, 2H), 1.03 (t, J = 7.6 Hz, 3H).

### Synthesis Example 2-5

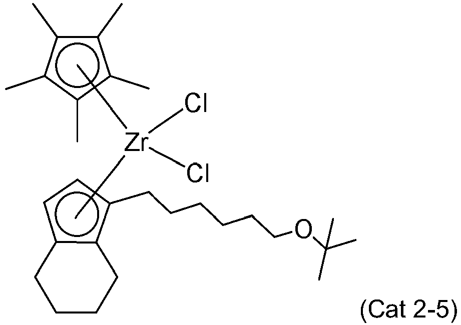

A transition metal compound of the above structure was prepared in the same manner as in Synthesis Example 2-2, except that tert-butoxyhexyl-I was used instead of CH₃-I during ligand preparation.

¹H NMR (500 MHz, CDCl3) δ 5.61 (d, J = 2.6 Hz, 1H), 5.21 (d, J = 2.6 Hz, 1H), 3.32 (t, J = 6.8 Hz, 2H), 2.99 - 2.86 (m, 2H), 2.39 - 2.27 (m, 2H), 2.17 - 2.04 (m, 2H), 2.02 (s, 15H), 1.98 - 1.87 (m, 1H), 1.83 - 1.55 (m, 4H), 1.55 - 1.35 (m, 4H), 1.35 - 1.21 (m, 3H), 1.19 (s, 9H).

### Synthesis Example 2-6

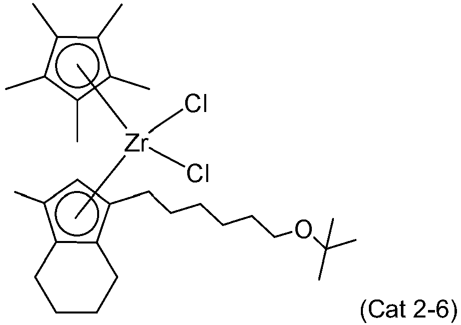

Indene (1 eq) was dissolved in THF (0.3 M), n-BuLi (1.05 eq) was slowly added dropwise at -25°C, and then stirred at room temperature for 3 hours. Then, CH₃-I (1.05 eq) was added at -10°C, stirred overnight at room temperature, and then worked-up using water and dried to obtain 3-Methyllndene. The thus synthesized 3-Methyllndene (1 eq) was dissolved in THF (0.3 M), n-BuLi (1.05 eq) was slowly added dropwise at - 25°C, and then stirred at room temperature for 3 hours. Then, tert-butoxyhexyl-I (1.05 eq) was added at -10°C, stirred overnight at room temperature, and then worked-up using water and dried to obtain 1-methyl-3-(tert-butoxyhexyl)-Indene.

### Preparation of transition metal compound

The ligand prepared above was dissolved in Ether (0.3 M), n-BuLi (1.05 eq) was added at -25°C, and then stirred at room temperature for 3 hours. In a Glove Box, PMCpZrCl₃ (Pentamethylcyclopentadienylzirconium trichloride) (1 eq) was prepared in another flask, and at -25°C, it was transferred to the ligand-Li flask using a cannula and washed and transferred using Ether (1.0 M).

When the reaction was complete, the solvent was removed by vacuum drying, DCM was re-added to remove LiCl through a filter, the filtrate was vacuum dried, and it was made into a slurry using Hexane. The resulting solid was then filtered and vacuum dried to obtain a solid metallocene compound intermediate.

In a Glove Box, the metallocene compound intermediate was placed in a mini parr, and Pd/C (10 wt%) was added at 5 mol%. A magnetic bar was added to this, and it was moved outside the Glove Box as a closed system. To this parr, DCM (0.5M) was added, and H₂ gas (10 barg) was introduced. Vent-charge was repeated 3 times, and then it was placed in a 40°C oil bath and stirred. When the pressure of the parr decreased to below 5 barg, the previous charge process was repeated, and the reaction was continued until there was no consumption of H₂ gas. When the reaction was complete, the remaining H₂ gas was vented and replaced with Ar gas. After cooling to room temperature, it was filtered using a cannula, and the filtrate was vacuum dried. The dried filtrate was made into a slurry using Hexane, which was then filtered to obtain a solid transition metal compound.

¹H NMR (500 MHz, CDCl3) δ 5.57 (s, 1H), 3.31 (t, J = 6.7 Hz, 2H), 2.95 - 2.85 (m, 2H), 2.37 - 2.28 (m, 2H), 2.18 - 2.03 (m, 2H), 2.02 (s, 15H), 1.96 - 1.88 (m, 1H), 1.82 - 1.77 (m, 1H), 1.75 (s, 3H), 1.71 - 1.55 (m, 3H), 1.53 - 1.36 (m, 4H), 1.36 - 1.20 (m, 3H), 1.18 (s, 9H).

### Synthesis Example 3-1

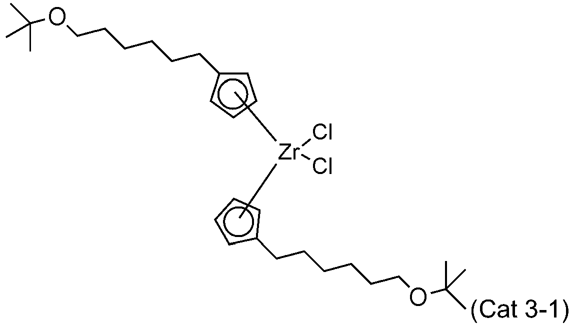

A transition metal compound of the above structure was prepared by the following method according to Preparation Example 2 of Korean Laid-Open Patent No. 10-2018-0161297.

### Synthesis Example 3-2

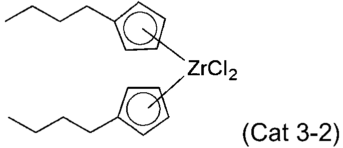

Product 447862 (Cas. No. 73364-10-0) from Sigma Aldrich Co. was purchased and used.

### Synthesis Example 3-3

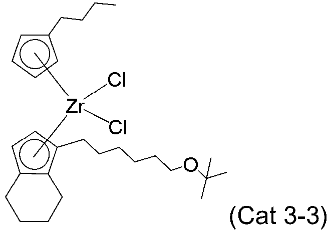

A transition metal compound of the above structure was prepared in the same manner as the preparation example of Korean Laid-Open Patent No. 10-2020-0064245.

### Synthesis Example 3-4

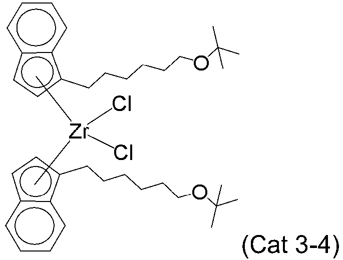

A transition metal compound of the above structure was prepared in the same manner as Synthesis Example 1 of Korean Laid-Open Patent No. 10-2020-101750.

### Synthesis Example 3-5

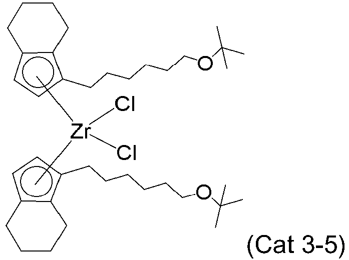

A transition metal compound of the above structure was prepared in the same manner as Preparation Example 1 of Korean Laid-Open Patent No. 10-2021-0032820.

### Synthesis Example 3-6

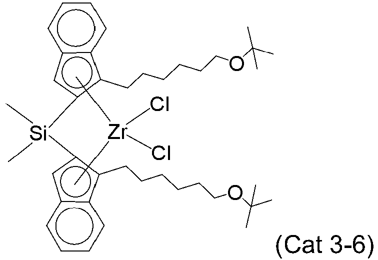

A transition metal compound of the above structure was prepared in the same manner as Preparation Example 4 of Korean Laid-Open Patent No. 10-2020-0090041.

### Synthesis Example 3-7

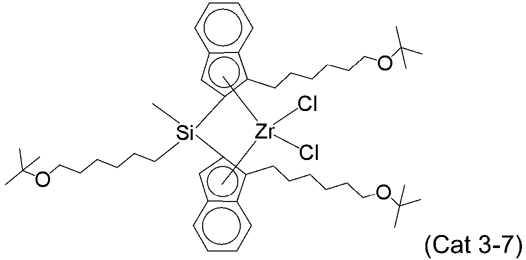

A transition metal compound of the above structure was prepared in the same manner as Preparation Example 2-3 of Korean Laid-Open Patent No. 10-2016-0029718.

### Synthesis Example 3-8

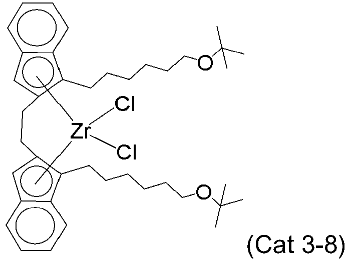

A transition metal compound of the above structure was prepared as disclosed in J. AM. CHEM. SOC. VOL. 126, No. 46, 2004 pp. 15231-15244.

### Synthesis Example 3-9

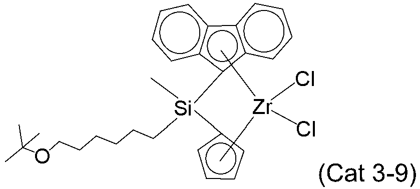

A transition metal compound of the above structure was prepared in the same manner as Example 1 of Korean Laid-Open Patent No. 2011-130839.

### Synthesis Example 3-10

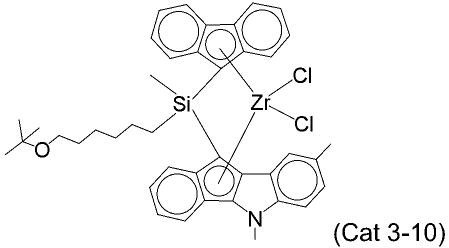

A transition metal compound of the above structure was prepared in the same manner as Preparation Example 1 of Korean Laid-Open Patent No. 10-2015-0045368.

### Synthesis Example 3-11

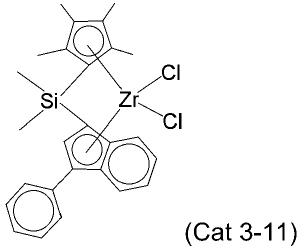

A transition metal compound of the above structure was prepared in the same manner as Synthesis Example 1 of Korean Laid-Open Patent No. 10-2021-0038379.

### Synthesis Example 3-12

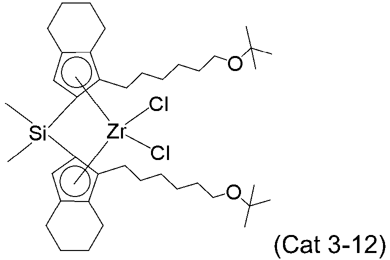

A transition metal compound of the above structure was prepared in the same manner as Preparation Example 1 of Korean Laid-Open Patent No. 10-2021-0032820.

### Synthesis Example 3-13

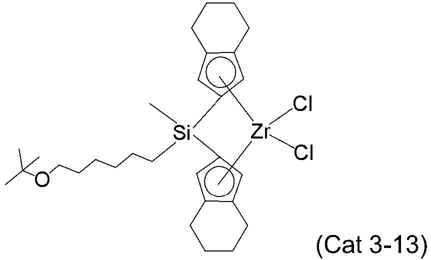

A transition metal compound of the above structure was prepared in the same manner as Preparation Example 2-4 of Korean Laid-Open Patent No. 10-2016-0029718.

### Synthesis Example 3-14

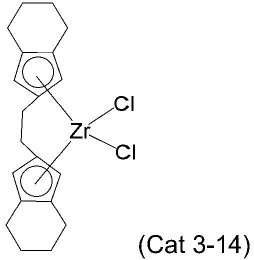

Product 532126 (Cas. No. 100163-29-9) from Sigma Aldrich Co. was purchased and used.

### Synthesis Example 3-15

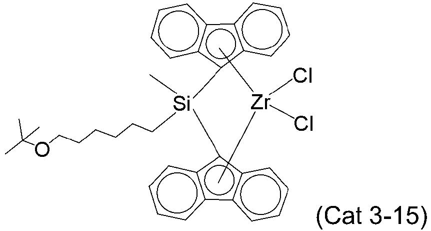

A transition metal compound of the above structure was prepared in the same manner as Example 1 of Korean Laid-Open Patent No. 10-2011-0130839.

### Synthesis Example 3-16

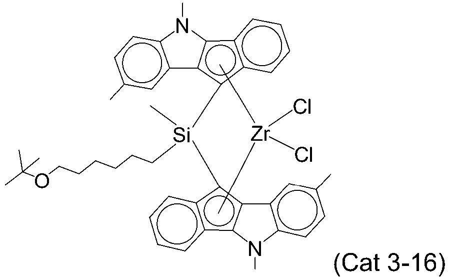

A transition metal compound of the above structure was prepared in the same manner as Preparation Example 2 of Korean Laid-Open Patent No. 10-2015-0045368.

### Synthesis Example 3-17

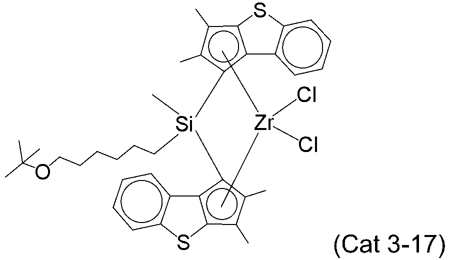

A transition metal compound of the above structure was prepared in the same manner as Synthesis Example 1 of Korean Laid-Open Patent No. 10-2022-0082511.

### Synthesis Example 3-18

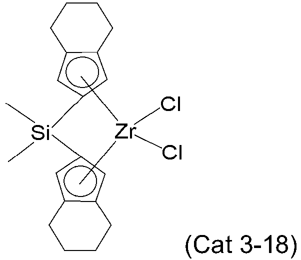

A transition metal compound of the above structure was prepared in the same manner as Preparation Example 2-8 of Korean Laid-Open Patent No. 10-2016-0029718.

### Synthesis Example 3-19

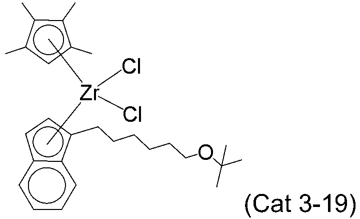

### Preparation of ligand

Indene (1 eq) was dissolved in THF (0.3 M), n-BuLi (1.05 eq) was slowly added dropwise at -25°C, and then stirred at room temperature for 3 hours. Then, (tert-butoxyhexyl)-I (1.05 eq) was added at -10°C, stirred overnight at room temperature, and then worked-up using water and dried to obtain 3-(tert-butoxyhexyl)-indene.

### Preparation of transition metal compound

The ligand prepared above was dissolved in Ether (0.3 M), n-BuLi (1.05 eq) was added at -25°C, and then stirred at room temperature for 3 hours. In a Glove Box, PMCpZrCl₃ (Pentamethylcyclopentadienylzirconium trichloride) (1 eq) was prepared in another flask, and at -25°C, it was transferred to the ligand-Li flask using a cannula and washed and transferred using Ether (1.0 M).

When the reaction was complete, the solvent was removed by vacuum drying, DCM was re-added to remove LiCl through a filter, the filtrate was vacuum dried, and it was made into a slurry using Hexane. The resulting solid was then filtered and vacuum dried to obtain a transition metal compound of the above structure.

¹H NMR (500 MHz, CDCl3) δ 7.63 (d, J = 8.3 Hz, 1H), 7.32 (d, J = 8.4 Hz, 1H), 7.28 - 7.20 (m, 4H), 5.93 (dd, J = 11.0, 2.6 Hz, 2H), 3.30 (t, J = 6.7 Hz, 2H), 3.09 - 2.97 (m, 1H), 2.59 - 2.45 (m, 1H), 1.93 (s, 3H), 1.92 (s, 3H), 1.88 (s, 3H), 1.85 (s, 3H), 1.66 - 1.23 (m, 8H), 1.17 (s, 9H).

### Synthesis Example 3-20

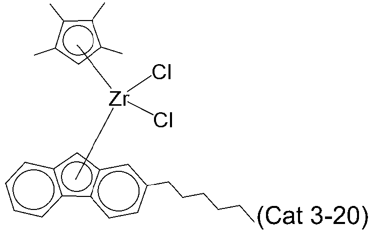

2-bromofluorene (1 eq) was dissolved in THF (0.3 M), n-BuLi (1.05 eq) was slowly added dropwise at -25°C, and then stirred at room temperature for 10 minutes. Then, (tert-butoxyhexyl)-I (1.05 eq) was added at -10°C, stirred overnight at room temperature, and then worked-up using water and dried to obtain 2-(tert-butoxyhexyl)-fluorene.

### Preparation of transition metal compound

The ligand prepared above was dissolved in Ether (0.3 M), n-BuLi (1.05 eq) was added at -25°C, and then stirred at room temperature for 3 hours. In a Glove Box, PMCpZrCl₃ (Pentamethylcyclopentadienylzirconium trichloride) (1 eq) was prepared in another flask, and at -25°C, it was transferred to the ligand-Li flask using a cannula and washed and transferred using Ether (1.0 M).

When the reaction was complete, the solvent was removed by vacuum drying, DCM was re-added to remove LiCl through a filter, the filtrate was vacuum dried, and it was made into a slurry using Hexane. The resulting solid was then filtered and vacuum dried to obtain a transition metal compound of the above structure.

¹H NMR (500 MHz, CDCl3) δ 8.16 (d, J = 8.4 Hz, 1H), 8.02 (d, J = 7.4 Hz, 1H), 7.77 (d, J = 7.4 Hz, 1H), 7.69 (d, J = 8.6 Hz, 1H), 7.48 (t, J= 7.5 Hz, 1H), 7.41 (s, 1H), 7.36 (t, J = 7.5 Hz, 1H). 6.30 (s, 1H), 5.62 (s, 1H), 2.13 - 2.02 (m, 2H), 1.93 (s, 3H), 1.92 (s, 3H), 1.88 (s, 3H), 1.85 (s, 3H), 1.55 - 1.12 (m, 8H), 0.81 (t, J = 7.0 Hz, 3H)

### Synthesis Example 3-21

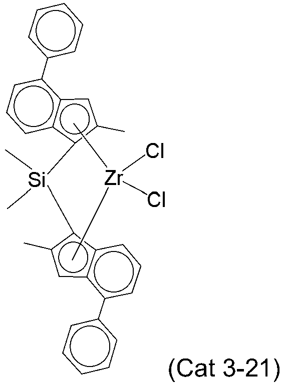

A transition metal compound of the above structure was prepared by the synthesis method of Comparative Synthesis Example [Chemical Formula 4] of Korean Laid-Open Patent 10-2015-0052803.

### Synthesis Example 3-22

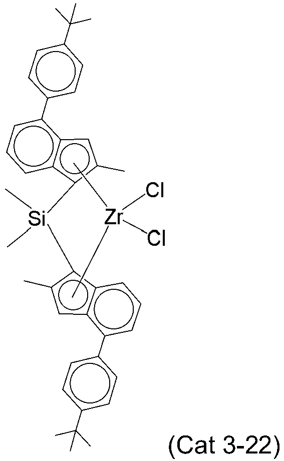

A transition metal compound of the above structure was prepared by the method described in Organometallics (2006), 25(5), 1217-1229.

### <Preparation of hybrid-supported metallocene catalyst>

### Preparation Example 1

In a 20L SUS high-pressure reactor, 2.0 kg of toluene and 1000 g of silica (SP2410, from Grace Davison Co.) were added, and the reactor temperature was raised to 40°C while stirring. To the reactor, 5.4 kg of methylaluminoxane (10 wt% in toluene, from Albemarle Co.) was added, the temperature was raised to 70°C, and then it was stirred at about 200 rpm for about 12 hours. Thereafter, the reactor temperature was lowered to 40°C, and stirring was stopped. Then, the reaction product was allowed to stand for about 10 minutes, followed by decantation. Again, 2.0 kg of toluene was added to the reaction product, stirred for about 10 minutes, stirring was stopped and it was allowed to stand for about 30 minutes, followed by decantation.

2.0 kg of toluene was added to the reactor, and then the compound Cat 1-1 (50.0 mmol) prepared in the above Preparation Example 1 as the first transition metal compound and the compound Cat 2-1 (10.0 mmol) prepared in the above Preparation Example 2 as the second transition metal compound, and 1000 mL of toluene were added. The reactor temperature was raised to 85°C and stirred for about 90 minutes.

Thereafter, the reactor temperature was lowered to room temperature, stirring was stopped, and the reaction product was allowed to stand for about 30 minutes, followed by decantation of the reaction product. Subsequently, 3 kg of hexane was added to the reactor, the hexane slurry solution was transferred to a 20L filter dryer to filter the solution, and it was dried under reduced pressure at 50°C for about 4 hours to obtain 1.5 kg of a hybrid-supported metallocene catalyst.

### Preparation Examples 2 to 8 and Comparative Preparation Examples 1 to 22

A hybrid-supported metallocene catalyst was prepared in the same manner as in Preparation Example 1, except that the types of the first and second transition metal compounds were changed as described in the following Table 1.

**[Table 1]**

| Catalyst | first transition metal compound | second transition metal compound |
|---|---|---|
| Preparation Example 1 | Cat 1-1 | Cat 2-1 |
| Preparation Example 2 | | Cat 2-2 |
| Preparation Example 3 | | Cat 2-3 |
| Preparation Example 4 | | Cat 2-4 |
| Preparation Example 5 | | Cat 2-5 |
| Preparation Example 6 | | Cat 2-6 |
| Preparation Example 7 | Cat 1-2 | Cat 2-1 |
| Preparation Example 8 | Cat 1-3 | Cat 2-1 |
| Comparative Preparation Example 1 | Cat 1-1 | Cat 3-1 |
| Comparative Preparation Example 2 | | Cat 3-2 |
| Comparative Preparation Example 3 | | Cat 3-3 |
| Comparative Preparation Example 4 | | Cat 3-4 |
| Comparative Preparation Example 5 | | Cat 3-5 |
| Comparative Preparation Example 6 | | Cat 3-6 |
| Comparative Preparation Example 7 | | Cat 3-7 |
| Comparative Preparation Example 8 | | Cat 3-8 |
| Comparative Preparation Example 9 | | Cat 3-9 |
| Comparative Preparation Example 10 | | Cat 3-10 |
| Comparative Preparation Example 11 | | Cat 3-11 |
| Comparative Preparation Example 12 | | Cat 3-12 |
| Comparative Preparation Example 13 | | Cat 3-13 |
| Comparative Preparation Example 14 | | Cat 3-14 |
| Comparative Preparation Example 15 | | Cat 3-15 |
| Comparative Preparation Example 16 | | Cat 3-16 |
| Comparative Preparation Example 17 | | Cat 3-17 |
| Comparative Preparation Example 18 | | Cat 3-18 |
| Comparative Preparation Example 19 | | Cat 3-19 |
| Comparative Preparation Example 20 | | Cat 3-20 |
| Comparative Preparation Example 21 | Cat 3-21 | Cat 2-1 |
| Comparative Preparation Example 22 | Cat 3-22 | Cat 2-1 |

### <Preparation of polyethylene>

### Examples 1 to 8 and Comparative Examples 1 to 22

A 140 L continuous polymerization reactor capable of an isobutene slurry loop process and operated at a reaction flow rate of about 7 m/s was prepared as a polymerization reactor. Then, the reactants required for polyethylene polymerization were continuously fed into the reactor as described in Table 2 and Table 3. The catalyst used in each polymerization reaction was the one prepared in the preparation examples or comparative preparation examples described in Table 1 above, and the catalyst was fed mixed in an isobutene slurry. The polymerization reaction was performed at a pressure of about 40 bar and a temperature of about 85°C.

The main conditions of the polymerization reaction are shown in Table 2.

**[Table 2]**

| | Catalyst | Ethylene feed rate (kg/hr) | 1-Hexene feed rate¹ (wt%) | hydrogen feed rate² (ppm) | Activity (kgPE/kgSiO2-hr) |
|---|---|---|---|---|---|
| Example 1 | Preparation Example 1 | 25.0 | 15 | 34 | 5.8 |
| Example 2 | Preparation Example 2 | 25.1 | 13 | 33 | 6.0 |
| Example 3 | Preparation Example 3 | 23.8 | 14 | 32 | 6.7 |
| Example 4 | Preparation Example 4 | 24.4 | 15 | 27 | 4.5 |
| Example 5 | Preparation Example 5 | 25.5 | 16 | 38 | 6.3 |
| Example 6 | Preparation Example 6 | 26.0 | 11 | 28 | 5.7 |
| Example 7 | Preparation Example 7 | 25.5 | 16 | 35 | 5.9 |
| Example 8 | Preparation Example 8 | 25.4 | 13 | 33 | 6.1 |
| Comparative Example 1 | Comparative Preparation Example 1 | 24.8 | 12 | 34 | 5.5 |
| Comparative Example 2 | Comparative Preparation Example 2 | 26.4 | 16 | 33 | 5.4 |
| Comparative Example 3 | Comparative Preparation Example 3 | 24.0 | 13 | 29 | 4.9 |
| Comparative Example 4 | Comparative Preparation Example 4 | 24.1 | 14 | 28 | 4.5 |
| Comparative Example 5 | Comparative Preparation Example 5 | 23.8 | 9 | 36 | 5.6 |
| Comparative Example 6 | Comparative Preparation Example 6 | 26.2 | 11 | 38 | 5.2 |
| Comparative Example 7 | Comparative Preparation Example 7 | 24.8 | 15 | 34 | 5.3 |
| Comparative Example 8 | Comparative Preparation Example 8 | 23.7 | 15 | 27 | 5.1 |
| Comparative Example 9 | Comparative Preparation Example 9 | 26.8 | 16 | 27 | 5.4 |
| Comparative Example 10 | Comparative Preparation Example 10 | 24.8 | 15 | 26 | 5.9 |
| Comparative Example 11 | Comparative Preparation Example 11 | 26.4 | 13 | 32 | 6.5 |
| Comparative Example 12 | Comparative Preparation Example 12 | 27.3 | 12 | 25 | 4.9 |
| Comparative Example 13 | Comparative Preparation Example 13 | 25.4 | 17 | 34 | 5.8 |
| Comparative Example 14 | Comparative Preparation Example 14 | 25.8 | 15 | 38 | 5.4 |
| Comparative Example 15 | Comparative Preparation Example 15 | 23.1 | 18 | 34 | 5.6 |
| Comparative Example 16 | Comparative Preparation Example 16 | 22.2 | 14 | 24 | 4.2 |
| Comparative Example 17 | Comparative Preparation Example 17 | 23.5 | 15 | 26 | 4.3 |
| Comparative Example 18 | Comparative Preparation Example 18 | 26.4 | 13 | 27 | 5.8 |
| Comparative Example 19 | Comparative Preparation Example 19 | 21.8 | 13 | 34 | 3.3 |
| Comparative Example 20 | Comparative Preparation Example 20 | 24.7 | 14 | 23 | 4.7 |
| Comparative Example 21 | Comparative Preparation Example 21 | 22.8 | 10 | 24 | 4.2 |
| Comparative Example 22 | Comparative Preparation Example 22 | 23.6 | 9 | 28 | 4.8 |

In Table 2, Activity (kgPE/kgSiO₂·hr) was calculated as the ratio of the weight of the polymer produced (kg PE) per weight of the supported catalyst used (kg) based on unit time (hr).

Also, the 1-Hexene feed rate (wt%) was calculated as a percentage of the 1-Hexene feed rate based on the total weight of monomers including ethylene and 1-hexene, and the hydrogen feed rate (ppm) is based on the total weight of monomers including ethylene and 1-hexene.

### Experimental Example

The physical properties of the polyethylene prepared in the Examples and Comparative Examples were measured as follows, and the results are shown in the following Table 3.

### (1) density (g/cm³)

Measured according to ASTM D1505 standard.

### (2) dart drop impact strength (gf)

The dart drop impact strength was measured according to the ASTM D1709 [Method A] standard on a 50 µm thick film prepared by the following method, and the average value was taken by measuring 20 or more times per film sample.

### <Film Preparation>

Based on the total weight of the polyethylene prepared in the above Example or Comparative Example, 1500 ppm of antioxidant (Songnox 1076 (Songwon):Songnox 1680 (Songwon) = 1:2 weight ratio) and 300 ppm of 3M Dynamar Polymer Processing Additive FX5929 were added and mixed, and using a twin-screw extruder (Twin screw extruder; TEK 30 MHS, from SMPLATECH CO., diameter 32 phi, L/D=40), it was extruded at an extrusion temperature of 190°C and an extrusion rate of 35 kg/hr to prepare about 18 kg of a pellet-form composition for film formation.

The film-forming composition prepared above was extruded under the following film extrusion conditions to prepare a film.

### <Film Extrusion Conditions>

Single screw extruder (Yujin Engineering Single Screw Extruder, Blown Film M/C, 50 phi, L/D=32)
Melting temperature (or extrusion temperature): 170°C
Die Gap: 2.0 mm
Die diameter: 120 mm
blown-up ratio: 2.5
Frost Line Height maintained at 250-260 mm
Sample extrusion rate: 300-500 g/min
Film thickness: 50 µm

### (3) processing pressure (processing load, bar)

Using a Haake extruder, the processing pressure (bar) was measured at cylinder-1/-2/-3/die = 180/185/185/190 and a speed of 40 rpm.

### (4) melt strength (mN)

The melt strength of the olefin polymer was measured using a Goettfert Rheotens 71.97 attached to a model 3211 Instron capillary rheometer. The olefin copolymer melt was discharged through a capillary die (flat die, 180° angle) with a length (L) to diameter (D) ratio (L/D) of 15. After equilibrating the sample at 190°C for 10 minutes, the piston was moved at a speed of 1 inch/min (2.54 cm/min). The standard test temperature was 190°C. The sample was uniaxially pulled by a set of accelerating nips located 100 mm below the die with an acceleration of 1.2 mm/s². The tension was recorded as a function of the pull-off speed of the nip rolls. The melt strength was defined as the average value (in mN) of the force measured at pulling speeds of 100 mm/s and 150 mm/s. The following conditions were used for melt strength measurement.
Plunger speed: 0.423 mm/s
Capillary die L/D: 15
Shear rate: 72 /s
Wheel initial speed: 18 mm/s
Wheel acceleration: 1.2 mm/s2
Barrel diameter: 9.52 mm

**[Table 3]**

| | Density (g/cm3) | dart drop impact strength (gf) | processing pressure (bar) | melt strength (mN) |
|---|---|---|---|---|
| Example 1 | 0.920 | 1054 | 163 | 114 |
| Example 2 | 0.921 | 912 | 168 | 98 |
| Example 3 | 0.920 | 1218 | 178 | 123 |
| Example 4 | 0.922 | 989 | 171 | 87 |
| Example 5 | 0.921 | 1159 | 189 | 106 |
| Example 6 | 0.916 | 842 | 214 | 68 |
| Example 7 | 0.918 | 1004 | 168 | 96 |
| Example 8 | 0.920 | 989 | 169 | 88 |
| Comparative Example 1 | 0.921 | 658 | 198 | 88 |
| Comparative Example 2 | 0.919 | 648 | 176 | 79 |
| Comparative Example 3 | 0.921 | 542 | 218 | 131 |
| Comparative Example 4 | 0.919 | 484 | 206 | 124 |
| Comparative Example 5 | 0.923 | 645 | 197 | 94 |
| Comparative Example 6 | 0.920 | 746 | 209 | 102 |
| Comparative Example 7 | 0.921 | 638 | 198 | 121 |
| Comparative Example 8 | 0.918 | 687 | 245 | 111 |
| Comparative Example 9 | 0.916 | 746 | 241 | 108 |
| Comparative Example 10 | 0.921 | 751 | 237 | 96 |
| Comparative Example 11 | 0.917 | 754 | 224 | 108 |
| Comparative Example 12 | 0.917 | 546 | 214 | 99 |
| Comparative Example 13 | 0.916 | 690 | 198 | 88 |
| Comparative Example 14 | 0.914 | 678 | 205 | 122 |
| Comparative Example 15 | 0.920 | 612 | 201 | 119 |
| Comparative Example 16 | 0.920 | 598 | 199 | 108 |
| Comparative Example 17 | 0.919 | 587 | 203 | 118 |
| Comparative Example 18 | 0.919 | 761 | 204 | 108 |
| Comparative Example 19 | 0.918 | 348 | 200 | 111 |
| Comparative Example 20 | 0.921 | 744 | 178 | 122 |
| Comparative Example 21 | 0.920 | 640 | 188 | 76 |
| Comparative Example 22 | 0.923 | 540 | 231 | 69 |

As can be confirmed from Table 3, the polyethylene of the Examples, prepared using the hybrid-supported metallocene catalyst comprising the first transition metal compound represented by Chemical Formula 1 and the second transition metal compound represented by Chemical Formula 2 according to the subject disclosure, exhibited a combination of the high molecular weight and high copolymerization characteristics expressed from the first transition metal compound and the low molecular weight and high copolymerization characteristics expressed from the second transition metal compound, resulting in high density and high dart drop impact strength while having low processing pressure, thus confirming excellent processability and impact strength.

On the other hand, the polyethylene of the Comparative Examples, prepared using a hybrid-supported metallocene catalyst containing the transition metal compounds of the Comparative Preparation Examples, had a broad molecular weight distribution or contained long chain branches (LCB, Long branch chain), so the processing pressure and melt strength were at a similar level to the polyethylene of the Examples, but it was confirmed that the impact strength was low.

## Claims

1. A hybrid-supported metallocene catalyst, comprising:
a first transition metal compound represented by the following Chemical Formula 1;
a second transition metal compound represented by the following Chemical Formula 2;
a cocatalyst; and
a support: 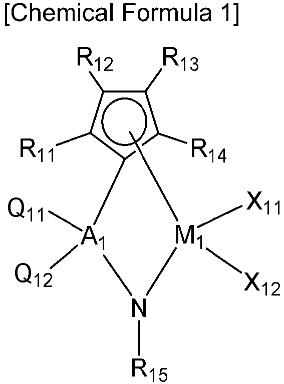
wherein in Chemical Formula 1,
M₁ is a Group 4 transition metal,
X₁₁ and X₁₂ are each independently, C₁₋₂₀ alkyl, or halogen,
A₁ is carbon, silicon, or germanium,
Q₁₁ and Q₁₂ are each independently, hydrogen, halogen, C₁₋₂₀ alkyl, or C₂₋₂₀ alkoxyalkyl, and
R₁₁ to R₁₅ are each independently, hydrogen, or C₁₋₂₀ alkyl, 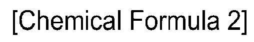 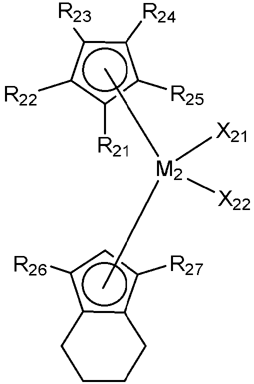
wherein in Chemical Formula 2,
M₂ is a Group 4 transition metal,
X₂₁ and X₂₂ are each independently, C₁₋₂₀ alkyl or halogen,
R₂₁ to R₂₅ are each independently, C₁₋₂₀ alkyl,
R₂₆ is hydrogen, or C₁₋₂₀ alkyl, and
R₂₇ is hydrogen, C₁₋₂₀ alkyl, C₂₋₂₀ alkoxy, or C₂₋₂₀ alkoxyalkyl.

2. The hybrid-supported metallocene catalyst of claim 1,
wherein M₁ is zirconium (Zr), or titanium (Ti), and
X₁₁ and X₁₂ are each independently, a halogen.

3. The hybrid-supported metallocene catalyst of claim 1,
wherein A₁ is silicon,
any one of Q₁₁ and Q₁₂ is an alkoxyalkyl of -(CH₂)ₙ-R_{b} (wherein R_{b} is a C₃₋₆ branched alkoxy group, and n is an integer from 2 to 10), and the other one is C₁₋₄ alkyl.

4. The hybrid-supported metallocene catalyst of claim 1,
wherein R₁₁ to R₁₅ are each independently, C₁₋₆ alkyl.

5. The hybrid-supported metallocene catalyst of claim 1,
wherein R₁₁ to R₁₄ are each independently, methyl, and
R₁₅ is tert-butyl.

6. The hybrid-supported metallocene catalyst of claim 1,
wherein the first transition metal compound is any one selected from the group consisting of the following compounds:

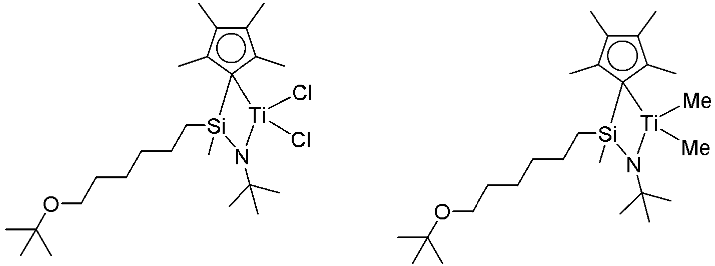

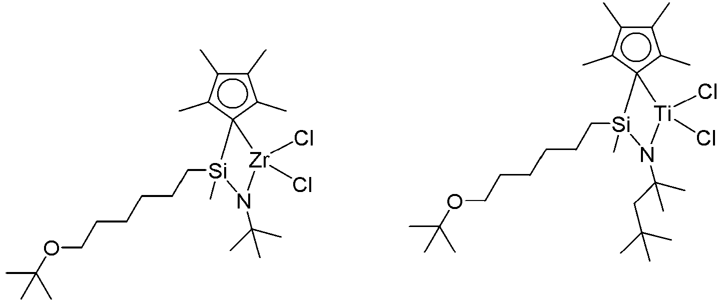

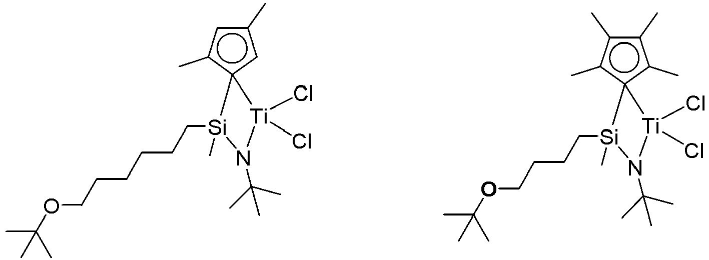

7. The hybrid-supported metallocene catalyst of claim 1,
wherein M₂ is zirconium (Zr), and
X₂₁ and X₂₂ are each independently, halogen.

8. The hybrid-supported metallocene catalyst of claim 1,
wherein R₂₁ to R₂₅ are each independently, methyl.

9. The hybrid-supported metallocene catalyst of claim 1,
wherein R₂₆ is hydrogen, or C₁₋₆ alkyl, and
R₂₇ is hydrogen, C₁₋₆ alkyl, or an alkoxyalkyl of -(CH₂)ₙ-R_{b} (wherein R_{b} is a C₃₋₆ branched alkoxy group, and n is an integer from 2 to 10).

10. The hybrid-supported metallocene catalyst of claim 1,
wherein the second transition metal compound is any one selected from the group consisting of the following compounds:

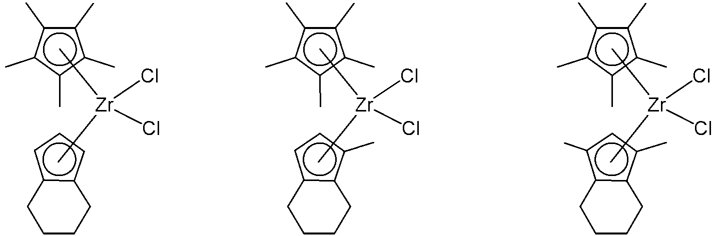

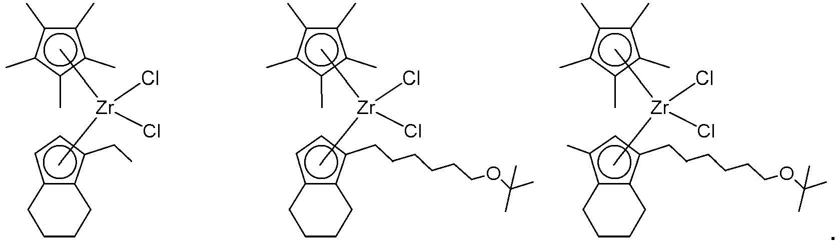

11. The hybrid-supported metallocene catalyst of claim 1,
wherein the first transition metal compound and the second transition metal compound are included in a molar ratio of 1:1 to 10:1.

12. The hybrid-supported metallocene catalyst of claim 1,
wherein the cocatalyst is at least one selected from the group consisting of compounds represented by the following Chemical Formula 3:
[Chemical Formula 3] -[Al(R₄₁)-O]a-
wherein in Chemical Formula 3,
R₄₁ is halogen; or a C₁₋₂₀ hydrocarbyl unsubstituted or substituted by halogen; and
a is an integer of 2 or more.

13. The hybrid-supported metallocene catalyst of claim 1,
wherein the support comprises silica, alumina, magnesia, or a mixture thereof.

14. A method for preparing polyethylene, comprising a step of polymerizing an ethylene monomer and an alpha-olefin based monomer while feeding hydrogen, in the presence of the hybrid-supported metallocene catalyst according to claim 1.

15. The method for preparing polyethylene of claim 14,
wherein the alpha-olefin based monomer is fed at 5 to 20% by weight based on the total weight of monomers including the ethylene monomer and the alpha-olefin based monomer, and the hydrogen is fed at 15 to 45 ppm based on the total weight of monomers including the ethylene monomer and the alpha-olefin based monomer.

16. The method for preparing polyethylene of claim 14,
wherein the alpha-olefin based monomer is 1-butene, 1-hexene, or 1-octene.

17. The method for preparing polyethylene of claim 14,
wherein the polyethylene satisfies the following conditions (i) and (ii):
(i) density measured according to ASTM D1505 standard: 0.91 to 0.93 g/cm³,
(ii) dart drop impact strength measured according to ASTM D1709 [Method A] is 800 gf or more.
